(19) Europäisches Patentamt
European Patent Office
Office européen des brevets

(11) EP 1 138 684 A1

(12) # EUROPEAN PATENT APPLICATION
published in accordance with Art. 158(3) EPC

(43) Date of publication:
**04.10.2001 Bulletin 2001/40**

(21) Application number: **99973294.4**

(22) Date of filing: **03.12.1999**

(51) Int Cl.[7]: **C07F 7/04**, C07F 7/18, C09K 3/00, C09D 5/16, C09D 127/12, C09D 133/00, C09D 183/00, C09D 185/00

(86) International application number:
**PCT/JP99/06782**

(87) International publication number:
**WO 00/34291 (15.06.2000 Gazette 2000/24)**

(84) Designated Contracting States:
**AT BE CH CY DE DK ES FI FR GB GR IE IT LI LU MC NL PT SE**

(30) Priority: **10.12.1998 JP 35150298**
**30.07.1999 JP 21781299**

(71) Applicant: **Daikin Industries, Ltd.**
**Osaka-shi, Osaka 530-8323 (JP)**

(72) Inventors:
- **OHRI, Haruhiko, Daikin Industries, Ltd. Settsu-shi, Osaka 566-8585 (JP)**
- **YONEI, Yasushi, Daikin Industries, Ltd. Settsu-shi, Osaka 566-8585 (JP)**
- **CHIDA, Akira, Daikin Industries, Ltd. Settsu-shi, Osaka 566-8585 (JP)**
- **HONDA, Kayoko, Daikin Industries, Ltd. Settsu-shi, Osaka 566-8585 (JP)**

(74) Representative: **HOFFMANN - EITLE**
**Patent- und Rechtsanwälte**
**Arabellastrasse 4**
**81925 München (DE)**

(54) **FLUORINATED ORGANOMETALLIC COMPOUNDS**

(57) A novel organometallic compound which has antifouling ability and can be used to formulate a coating composition giving a coating film which in an early stage comes to have an antifouling effect; and an oligomer or cooligomer thereof. The organometallic compound has at least one $C_4$ alkoxyl group having six fluorine atoms. An antifouling agent and a coating composition each comprising the organometallic compound or the (co)oligomer are also provided.

EP 1 138 684 A1

## Description

TECHNICAL FIELD

The present invention relates to a novel fluorine-containing organometallic compound, stain-proofing agent and coating composition. The coating composition is suitable for paints for building materials, civil engineering, heavy duty coating, automobiles, etc.

BACKGROUND ART

In recent years, a solvent-soluble fluoroolefin copolymer containing hydroxyl group or carboxyl group has been used as an ultra-high weather resistive coating resin, and the use thereof has been increasing. It is known that copolymers of fluoroolefin with vinyl ether, vinyl ester, or the like, which are proposed, for example, in JP-B-60-21686, JP-A-3-121107, JP-A-4-279612 and JP-A-4-28707, are soluble in usual solvents for paints, and in combination with a curing agent such as isocyanate or melamine, can be baked or cured at normal temperature to form coating films excellent in weather resistance.

However, those coating films have a problem that, when the films are exposed outdoors, stains in the air and in the rain water are easy to adhere to and deposit on a surface of the coating film (inferior in stain-proofing property for preventing adherence of stains). In order to improve wipe-off property of carbon stains and marking ink (stain removability), reaction products of fluoroolefin copolymer and silane compound were investigated, for example, in JP-A-4-173881. Also in USP3429845 and JP-A-4-275379, there are proposed compositions of hydroxyl group-containing fluoroolefin copolymers and a hydrolysis product prepared by adding water and a catalyst (hydrochloric acid, etc.) to a silicate (monomer) or a silicate condensate (oligomer) and then hydrolyzing the mixture in alcohol. However, those compositions cannot offer the effect of improving the above-mentioned stain-proofing property.

Techniques employing a silane compound as a curing moiety as mentioned above are also proposed in JP-B-45-11309, JP-A-5-78612, JP-A-61-258852, JP-A-62-116673, JP-A-64-75575, JP-A-2-232221, JP-A-2-240153, JP-A-4-211482, JP-A-4-65476 and JP-A-4-292677. However, curing is insufficient due to large contents of alcohol and water. On the other hand, since a silicate originally has hydroxyl group or requires high temperature baking, migration of the silicate to the surface of coating film is inhibited. Also there is a problem that since the silane compound has a non-hydrolyzable group, hydrophilic property is insufficient. Due to the mentioned reasons, the stain-proofing property is not improved like the above-mentioned other proposals.

The situation is the same with respect to other paints of acryl, acrylic silicon, inorganic materials, or the like, and a coating film having remarkably improved stain-proofing property is scarcely known.

Though silane compounds are used as a dehydrating agent at the time of polymerizing or dispersing pigments, almost all amount of the silane compound reacts with water during production process and thus, the effect of improving the stain-proofing property of the resulting coating film is scarcely obtained.

Further as disclosed, for example, in WO94/06870, WO95/02645, JP-A-7-48540, JP-A-7-102211, JP-A-7-136584, JP-A-7-173429, JP-A-7-82520, JP-A-7-109435 and JP-A-7-60184, techniques using organometallic compounds for improving stain-proofing property have been proposed, but those techniques cannot satisfy requirements with respect to hydrophilic property of a coating film surface, repeatability thereof, stain-proofing property, curability, compatibility, recoatability, storage stability, pot life, floating resistance, antifoaming property, workability in coating and cracking of the coating film surface.

The inventors of the present invention have developed a coating composition being capable of forming a coating film which is remarkably excellent in stain-proofing property whereby neither stains in the air nor stains marked due to rain water adhere to or are deposited on the coating film surface, and a stain-proofing agent for adding to the composition which comprises,
an organometallic compound represented by the formula (1a):

$$X'_bM(OR^{1'})_aR^2_c \qquad (1a)$$

wherein a is 0 or an integer of 1 to 6, b is 0 or an integer of 1 to 5, c is 0 or an integer of 1 to 6 (provided that a + b + c ≧ 3, a and c are not zero at the same time), X' are the same or different, and each is hydrogen atom or a monovalent organic group which has 1 to 5,000 carbon atoms and may contain oxygen atom, nitrogen atom, fluorine atom and/or chlorine atom, M is a metal atom having at least three valences, $R^{1'}$ are the same or different, and each is hydrogen atom, a siloxane residue or a monovalent organic group which has 1 to 1,000 carbon atoms and may contain oxygen atom, nitrogen atom, fluorine atom and/or chlorine atom, $R^2$ are the same or different, and each is an organic group

which has 1 to 20 carbon atoms, has a chelating ability and may contain oxygen atom, nitrogen atom, fluorine atom and/or chlorine atom; an oligomer thereof; or
a cooligomer comprising two or more of the organometallic compounds; provided that a stain-proofing agent comprising a compound represented by the formula (2):

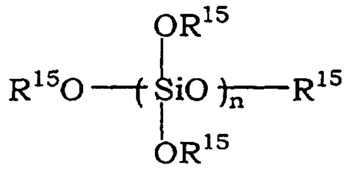

(2)

wherein n is an integer of 1 to 20, all of $R^{15}$ are different or at least two of $R^{15}$ are the same, each is a monovalent organic group having 1 to 1,000 carbon atoms and may contain oxygen atom, nitrogen atom and/or silicon atom, and a part or the whole of hydrogen atoms of the organic group may be substituted by fluorine atom or fluorine atom and chlorine atom, is excluded (WO97/11130).

An object of the present invention is to provide particularly a fluorine-containing organometallic compound, oligomer and cooligomer being capable of exhibiting the both of stain-proofing property and anti-blocking property among the compound, oligomer and cooligomer represented by the above-mentioned formulae (1a) and (2), and further a stain-proofing agent and a coating composition.

DISCLOSURE OF INVENTION

Namely the present invention relates to the organometallic compound represented by the formula (1):

$$X_bM(OR^1)_aR^2_c \qquad (1)$$

wherein a is 0 or an integer of 1 to 6, b is 0 or an integer of 1 to 5, c is 0 or an integer of 1 to 6 (provided that $a + b + c \geqq 3$, a and c are not zero at the same time), X are the same or different, and each is hydrogen atom or a monovalent organic group which has 1 to 5,000 carbon atoms and may contain oxygen atom, nitrogen atom, fluorine atom and/or chlorine atom, M is a metal atom having at least three valences, $R^1$ are the same or different, and each is hydrogen atom or a monovalent organic group which has 1 to 1,000 carbon atoms and may contain oxygen atom, nitrogen atom, fluorine atom and/or chlorine atom (provided that at least one of $R^1$ is one represented by the formula:

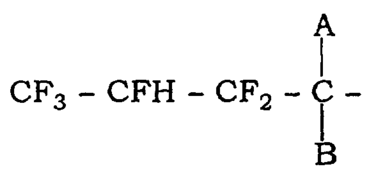

wherein A and B are the same or different, and each is hydrogen atom or $C_nH_{2n+1}$, in which n is an integer of 1 to 5), $R^2$ are the same or different, and each is a monovalent organic group which has 1 to 20 carbon atoms, has a chelating ability and may contain oxygen atom, nitrogen atom, fluorine atom and/or chlorine atom; an oligomer thereof; or
a cooligomer comprising two or more of the organometallic compounds.

In the above-mentioned formula (1), it is preferable that at least one of $R^1$ is $CF_3CHFCF_2CH_2$, $CF_3CHFCF_2CHCH_3$ or $CF_3CHFCF_2C(CH_3)_2$.

In the above-mentioned formula (1), it is preferable that the metal atom M is aluminum atom, titanium atom, boron atom, zirconium atom or silicon atom.

Further the present invention relates to the stain-proofing agent comprising the organometallic compound, an oligomer thereof or a cooligomer comprising two or more of the organometallic compounds and to the coating composition which comprises (A) the above-mentioned stain-proofing agent, (B) a resin for paints and (C) a curing agent and/or a curing catalyst.

Examples of the preferable resin for paints are fluoroolefin copolymer containing hydroxyl group and/or carboxyl group, acrylic polyol resin, acrylic silicon resin, inorganic material and homopolymer and copolymer of vinylidene

fluoride having no functional group which are soluble in a solvent.

BEST MODE FOR CARRYING OUT THE INVENTION

First the novel organometallic compounds, oligomers and cooligomers thereof of the present invention are explained below.

In the organometallic compound of the formula (1), a is 0 or an integer of 1 to 6 from the viewpoint of surface concentrating property, hydrolyzability and releasing property, and is preferably an integer of 2 to 4.

The above-mentioned b is 0 or an integer of 1 to 5 from the viewpoint of surface concentrating property and hydrophilic property, and is preferably 0 or 1.

The above-mentioned c is 0 or an integer of 1 to 6 from the viewpoint of surface concentrating property, hydrolyzability and releasing property, and is preferably 0 or an integer of 1 to 3.

Also it is preferable that a mole ratio of X to $R^1 + R^2$ is not more than 0.2 ($b/(a + c) \leqq 0.2$).

A total amount of a, b and c is decided based on valence of the metal atom M. In the formula (1), since either of $OR^1$ or $R^2$ is necessary for stain-proofing property, surface concentrating property and hydrolyzability, there is no case where both of a and c are zero at the same time, and the total amount of a, b and c is at least 3.

The above X is hydrogen atom or a monovalent organic group of, for example, the following (1) to (3) which has 1 to 5,000 carbon atoms and may contain oxygen atom, nitrogen atom, fluorine atom and/or chlorine atom.

(1) As the organic group X, there are, for example, $H(CH_2)_p$, $(CH_3)_2CH$, $H(CH_2)_pC{=}0$, $F(CF_2)_q(CH_2)_p$, $(CF_3)_2CH$, $H(CF_2)_q(CH_2)_p$, and the like, wherein p is 0 or an integer of 1 to 6, q is an integer of 1 to 10, a part of fluorine atoms may be substituted by chlorine atoms. Those organic groups may be linear or branched.

Examples thereof are, for instance, $CH_3$, $CH_3CH_2$, $CH_3CH_2CH_2$, $(CH_3)_2CH$, $CF_3CH_2$, $CF_3CF_2CH_2$, $(CF_3)_2CH$, $F(CF_2)_4CH_2CH_2$, $F(CF_2)_8CH_2CH_2$, $H(CF_2)_4CH_2$, and the like. From the viewpoint of surface concentrating property, hydrolyzability and releasing property, $CF_3CF_2CH_2$ and $(CF_3)_2CH$ are preferable.

(2) Also as the organic group X, there are, for example, organic groups having a functional group such as $NH_2$, secondary amine, tertiary amine, OH, NCO, $CO_2H$, $CO_2Na$, $CO_2K$, $SO_3H$, $SO_2Na$, $SO_3K$, epoxy group, oxyethylene group ($CH_2CH_2O$), or the like.

Examples thereof are, for instance, $H_2N(CH_2)_3$, $OCN(CH_2)_3$, $CH_3O(CH_2CH_2O)(CH_2)_3$, $CH_3O(CH_2CH_2O)_5(CH_2)_3$, $CH_3O(CH_2CH_2O)_{10}(CH_2)_3$,

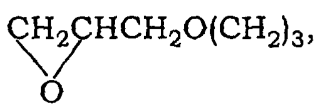

and the like. From the viewpoint of hydrophilic property, compatibility and adhesion, $OCN(CH_2)_3$ and $CH_3O(CH_2CH_2O)_5(CH_2)_3$ are preferable.

(3) Further as the organic group X, there are, for example, polymerizable organic groups which may contain oxygen atom, nitrogen atom, fluorine atom, chlorine atom, silicon atom, or the like.

Examples thereof are, for instance, $CH_2{=}C(CH_3)CO_2(CH_2)_3$, $CH_2{=}CH$, $CH_2{=}CHCH_2$, $CH_2{=}CHO(CH_2)_3$, $CH_2{=}CHOCO(CH_2)_3$, $CH_2{=}CHC_6H_4$, $CH_2{=}CHCO_2(CH_2)_3$, and the like. From the viewpoint of polymerizability and availability, $CH_2{=}C(CH_3)CO_2(CH_2)_3$ and $CH_2{=}CHO(CH_2)_3$ are preferable.

Polymers or copolymers which have a molecular weight of 2,000 to 200,000, preferably 5,000 to 20,000 and are prepared by polymerizing or copolymerizing the compounds represented by the formula (1) which have the polymerizable organic group as mentioned above, are also encompassed in the present invention.

The above $R^1$ are the same or different, and may contain oxygen atom, nitrogen atom, fluorine atom and/or chlorine atom. From the viewpoint of surface concentrating property, hydrolyzability and releasing property, each is hydrogen atom or a monovalent organic group having 1 to 1,000 carbon atoms. The number of carbon atoms is preferably from 1 to 100, more preferably 1 to 16. Among the $R^1$, at least one is $CF_3CHFCF_2CH_2$, $CF_3CHFCF_2CHCH_3$ or $CF_3CHFCF_2C(CH_3)_2$.

Among the $R^1$ other than $CF_3CHFCF_2CH_2$, $CF_3CHFCF_2CHCH_3$ and $CF_3CHFCF_2C(CH_3)_2$, examples of the preferred monovalent organic group are, for instance, $H(CH_2)_m$, $(CH_3)_2CH$, $H(CH_2)_mC{=}O$, $F(CF_2)_n(CH_2)_m$, $(CF_3)_2CH$, $H(CF_2)_n(CH_2)_m$, $F(CF_2)_n(CH_2)_mC{=}O$, $H(CF_2)_n(CH_2)_mC{=}O$, $(F(CF_2)_n(CH_2)_m)_2N$, $((CF_3)_2CH)_2N$, $(H(CF_2)_n(CH_2)_m)_2N$, $F(CF_2)_nO(CF(CF_3)CF_2O)_mCF(CF_3)C{=}O$, $(F(CF_2)_n(CH_2)_m)_2C{=}N$, $((CF_3)_2CH)_2C{=}N$, $(H(CF_2)_n(CH_2)_m)_2C{=}N$, $F(CF_2)_n(CH_2)_mC{=}ONR^3$, $H(CF_2)_n(CH_2)_mC{=}ONR^3$, $F(CF_2)_n(CH_2)_mC{=}CH_2$, $H(CF_2)_n(CH_2)_mC{=}CH_2$, $F(CF_2)_n(CH_2)_mC{=}CF_2$ and $H(CF_2)_n(CH_2)_mC{=}CF_2$, wherein m is 0 or an integer of 1 to 6, n is an integer of 1 to 10, $R^3$ is alkyl which has 1 to 6

carbon atoms and may be linear or branched.

Examples of those organic groups are, for instance, $CF_3CH_2$, $CF_3CF_2CH_2$, $CF_3(CF_2)_2CH_2$, $CF_3(CF_2)_3CH_2CH_2$, $(CF_3)_2CH$, $CF_3(CF_2)_7CH_2CH_2$, $H(CF_2)_2CH_2$, $H(CF_2)_3CH_2$, $H(CF_2)_4CH_2$, $CF_3C{=}O$, $CF_3CF_2C{=}O$, $CF_3(CF_2)_6C{=}O$, $CF_3(CF_2)_7C{=}O$, and the like. From the viewpoint of surface concentrating property, hydrolyzability and releasing property, $CF_3CH_2$, $CF_3CF_2CH_2$, $CF_3(CF_2)_2CH_2$, $CF_3(CF_2)_3CH_2CH_2$, $CF_3C{=}O$ and $CF_3CF_2C{=}O$ are preferred, and $CF_3CH_2$ and $CF_3CF_2CH_2$ are more preferable. $R^1$ may be an organic high molecular chain having the number of carbon atoms up to 1,000.

The above $R^2$ may be the same or different and is an organic group which has an excellent chelating ability even when containing fluorine atom and/or chlorine atom. It is preferable that $R^2$ have the number of carbon atoms of 1 to 20, preferably 2 to 10 from the viewpoint of surface concentrating property, hydrolyzability and releasing property.

In the present invention, since the stain-proofing agent, in which an organic group having such a chelating ability is bonded, is used, there can be obtained effects of exhibiting excellent storage stability, reactivity, solubility and compatibility.

Examples of the preferred compounds which are capable of becoming an organic group having the chelating ability are, for instance, β-diketones such as 2,4-pentanedione and 2,4-heptanedione; keto esters such as methyl acetoacetate, ethyl acetoacetate and butyl acetoacetate; hydroxycarboxylic acids such as lactic acid, methyl lactate, ethyl lactate, ammonium lactate, salicylic acid, methyl salicylate, ethyl salicylate, malic acid, ethyl malate, tartaric acid, ethyl tartrate, an ester and a salt thereof; keto-alcohols such as 4-hydroxy-4-methyl-2-pentanone, 4-hydroxy-2-pentanone, 4-hydroxy-2-heptanone and 4-hydroxy-4-methyl-2-heptanone; amino-alcohols such as monoethanolamine, diethanolamine, triethanolamine, N-methylmonoethanolamine, N-ethylmonoethanolamine, N,N-dimethylethanolamine and N,N-diethylethanolamine; active hydrogen compounds with enolic form such as diethyl malonate, methylolmelamine, methylolurea and methylolacrylamide; and the like. From the viewpoint of surface concentrating property, more preferable are compounds which are obtained by substituting a part or the whole of hydrogen atoms of the above-mentioned compounds by fluorine atom and/or chlorine atom.

Examples of the above-mentioned metal atom M are, for instance, B, Al, Ga, In, Tl, Sc, Y, La, Ac, Si, Ge, Sn, Pb, Ti, Zr, Hf, As, Sb, Bi, V, Nb, Ta, Te, Po, Cr, Mo, W, At, Mn, Tc, Re, Fe, Co, Ni, Ru, Rh, Pd, Os, Ir, Pt, and the like. From the viewpoint of synthesis and availability, Al, Ti, B, Zr or Si is preferable.

As the organometallic compound represented by the formula (1), oligomer thereof or oligomer comprising two or more of the organometallic compounds, there are, for example, the following organometallic compounds or oligomers or cooligomers obtained therefrom.

In case where in the formula (1), b is zero, there are: $B(OCH_3)_3$, $B(OC_2H_5)_3$, $B(OCH_2CF_2CF_3)_3$, $B(OCH(CF_3)_2)_3$, $B(OCH_2C_3F_6H)_3$, $B(OCH_2CH_2C_8F_{17})_3$, $B(OCH_2CF_2CF_3)_2(OCH_3)$, $B(OCH_2C_3F_6H)_2(OCH_3)$, $B(OCH(CF_3)_2)_2(OCH_3)$, $B(OCH_2CH_2C_8F_{17})_2(OCH_3)$, $B(OCH_2CF_2CF_3)_2(OH)$, $B(OCH(CF_3)_2)_2(OH)$, $B(OCH_2CH_2C_8F_{17})_2(OH)$, $B(OCOCF_3)_3$, $B(OCOC_2F_5)_3$, $B(OCOC_8F_{17})_3$, $B(OCOCF_3)_2(OCH_3)$, $B(OCOC_2F_5)_2(OCH_3)$, $B(OCOC_8F_{17})_2(OCH_3)$, $Al(OCH_2CF_2CF_3)_3$, $Al(OCH(CF_3)_2)_3$, $Al(OCH_2C_3F_6)_3$, $Al(OCH_2CH_2C_8F_{17})_3$, $Al(OCH_2CF_2CF_3)_2(OCH_3)$, $Al(OCH_2C_3F_6)_2(OCH_3)$, $Al(OCH(CF_3)_2)_2(OCH_3)$, $Al(OCH_2CH_2C_8F_{17})_2(OCH_3)$, $Al(OCH_2CF_2CF_3)_2(OH)$, $Al(OCH(CF_3)_2)_2(OH)$, $Al(OCH_2CH_2C_8F_{17})_2(OH)$, $Al(OCOCF_3)_3$, $Al(OCOC_2F_5)_3$, $Al(OCOC_8F_{17})_3$, $Al(OCOCF_3)_2(OCH_3)$, $Al(OCOC_2F_5)_2(OCH_3)$, $Al(OCOC_8F_{17})_2(OCH_3)$, $Al(CF_3COCHCOCF_3)_3$, $Al(CF_3COCHCOCF_3)_2(CH_3COCHCOCH_3)$, $Al(CF_3COCHCOOC_2H_5)_3$, $Al(CF_3COCHCOOC_2H_5)_2(CH_3COCHCOCH_3)$, $Al(CF_3COCHCOCF_3)_2(OH)$, $Al(CF_3COCHCOOC_2H_5)_2(OH)$, $Ti(OCH_2CF_2CF_3)_4$, $Ti(OCH(CF_3)_2)_4$, $Ti(OCH_2C_3F_6H)_4$, $Ti(OCH_2CH_2C_8F_{17})_4$, $Ti(OCH_2CF_2CF_3)_2(OCH_3)_2$, $Ti(OCH(CF_3)_2)_2(OCH_3)_2$, $Ti(OCH_2C_3F_{36}H)_2(OCH_3)_2$, $Ti(OCH_2CH_2C_8F_{17})_2(OCH_3)_2$, $Ti(OCH_2CF_2CF_3)_2(OCH(CH_3)_2)_2$, $Ti(OCH(CF_3)_2)_2(OCH(CH_3)_2)_2$, $Ti(OCH_2CH_2C_8F_{17})_2(OCH(CH_3)_2)_2$, $Ti(OCH_2CF_2CF_3)_2(OH)_2$, $Ti(OCH(CF_3)_2)_2(OH)_2$, $Ti(OCH_2CH_2C_8F_{17})_2(OH)_2$, $Ti(OCOCF_3)_4$, $Ti(OCOC_2F_5)_4$, $Ti(OCOC_8F_{17})_4$, $Ti(OCOCF_3)_2(OCH_3)_2$, $Ti(OCOC_2F_5)_2(OCH_3)_2$, $Ti(OCOC_8F_{17})_2(OCH_3)_2$, $Ti(CF_3COCHCOCF_3)_2(OCH(CH_3)_2)_2$, $Ti(CF_3COCHCOOC_2H_5)_2(OCH(CH_3)_2)_2$, $Si(OCH_3)_4$, $Si(OC_2R_5)_4$, $Si(OCH_2CF_2CF_3)_4$, $Si(OCH_2CF_2CF_3)_2(OCH_3)_2$, $Si(OCH_2C_3F_6H)_4$, $Si(OCH_2C_3F_6H)$, $Si(OCHCH_3CF_2CHFCF_3)_4$, $Si(OCHCH_3CF_2CHFCF_3)_4$, $Si(OCHCH_3CF_2CHFCF_3)_3(OCH_3)$, $Si(OC(CH_3)_2CF_2CHFCF_3)_4$, $Si(OC(CH_3)_2CF_2CHFCF_3)_3(OCH_3)$, $Si(OCH_2CH_2C_8F_{17})_4$, $Si(OCH_2CH_2C_8F_{17})_3(OCH_3)$, $Si(OCOCF_3)_4$, $Si(OCOC_8F_{17})_4$, and the like.

In case where in the formula (1), b is 1, there are: $HSi(OCH_2CF_3)_3$, $HSi(OCH_2CF_2CF_3)_3$, $HSi(OCH(CF_3)_2)_3$, $HSi(OCH_2CH_2C_8F_{17})_3$, $HSi(OCH_2CF_2CF_3)_2(OCH_3)$, $HSi(OCH(CF_3)_2)_2(OCH_3)$, $HSi(OCH_2CH_2C_8F_{17})_2(OCH_3)$, $HSi(OCH_2CF_2CF_3)_2(OH)$, $HSi(OCH(CF_3)_2)_2(OH)$, $HSi(OCH_2CH_2C_8F_{17})_2(OH)$, $HSi(OCOCF_3)_3$, $HSi(OCOC_2F_5)_3$, $HSi(OCOC_8F_{17})_3$, $HSi(OCOCF_3)_2(OCH_3)$, $HSi(OCOC_2F_5)_2(OCH_3)$, $HSi(OCOC_8F_{17})_2(OCH_3)$, $CH_3Si(OCH_3)_3$, $CH_3Si(OCH_2CF_3)_3)$ $CH_3Si(OCH_2CF_2CF_3)_3$, $CH_3Si(OCH(CF_3)_2)_3$, $CH_3Si(OCH_2CH_2C_8F_{17})_3$, $CH_3Si(OCH_2CF_2CF_3)_2(OCH_3)$, $CH_3Si(OCH(CF_3)_2)_2(OCH_3)$, $CH_3Si(OCH_2CH_2C_8F_{17})_2(OCH_3)$, $CH_3Si(OCH_2CF_2CF_3)_2(OH)$, $CH_3Si(OCH(CF_3)_2)_2(OH)$, $CH_3Si(OCH_2CH_2C_8F_{17})_2(OH)$, $CH_3Si(OCOCF_3)_3$, $CH_3Si(OCOC_2F_5)_3$, $CH_3Si(OCOC_8F_{17})_3$, $CH_3Si(OCOCF_3)_2(OCH_3)$, $CH_3Si(OCOC_2F_5)_2(OCH_3)$, $CH_3Si(OCOC_8F_{17})_2(OCH_3)$, $H_2N(CH_2)_3Si(OCH_2CF_3)_3$, $H_2N(CH_2)_3Si(OCH_2CF_2CF_3)_3$, $H_2N(CH_2)_3Si(OCH(CF_3)_2)_3$, $H_2N(CH_2)_3Si(OCH_2CH_2C_8F_{17})_3$, $H_2N(CH_2)_3Si(OCH_2CF_2CF_3)_2(OCH_3)$, $H_2N(CH_2)_3Si(OCH(CF_3)_2)_2(OCH_3)$, $H_2N(CH_2)_3Si(OCH_2CH_2C_8F_{17})_2(OCH_3)$, $H_2N(CH_2)_3Si(OCH_2CF_2CF_3)_2(OH)$, $H_2N$

$(CH_2)_3Si(OCH(CF_3)_2)_2(OH)$, $H_2N(CH_2)_3Si(OCH_2CH_2C_8F_{17})_2(OH)$, $H_2N(CH_2)_3Si(OCOCF_3)_3$, $H_2N(CH_2)_3Si(OCOC_2F_5)_3$, $H_2N(CH_2)_3Si(OCOC_8F_{17})_3$, $H_2N(CH_2)_3Si(OCOCF_3)_2(OCH_3)$, $H_2N(CH_2)_3Si(OCOC_2F_5)_2(OCH_3)$, $H_2N(CH_2)_3Si(OCOC_2F_5)_2(OCH_3)$, $H_2N(CH_2)_3Si(OCOC_8F_{17})_2(OCH_3)$, $OCN(CH_2)_3Si(OCH_2CF_3)_3$, $OCN(CH_2)_3Si(OCH_2CF_2CF_3)_3$, $OCN(CH_2)_3Si(OCH(CF_3)_2)_3$, $OCN(CH_2)_3Si(OCH_2CH_2C_8F_{17})_3$, $OCN(CH_2)_3Si(OCH_2CF_2CF_3)_2(OCH_3)$, $OCN(CH_2)_3Si(OCH(CF_3)_2)_2(OCH_3)$, $OCN(CH_2)_3Si(OCH_2CH_2C_8F_{17})_2(OCH_3)$, $OCN(CH_2)_3Si(OCOCF_3)_3$, $OCN(CH_2)_3Si(OCOC_8F_{17})_3$, $OCN(CH_2)_3Si(OCOCF_3)_2(OCH_3)$, $OCN(CH_2)_3Si(OCOC_2F_5)_2(OCH_3)$, $OCN(CH_2)_3Si(OCOC_8F_{17})_2(OCH_3)$, $CH_3O(CH_2CH_2O)_g(CH_2)_3Si(OCH_2CF_3)_3$, $CH_3O(CH_2CH_2O)_g(CH_2)_3Si(OCH_2CF_2CF_3)_3$, $CH_3O(CH_2CH_2O)_g(CH_2)_3Si(OCH(CF_3)_2)_3$, $CH_3O(CH_2CH_2O)_g(CH_2)_3Si(OCH_2CH_2C_8F_{17})_3$, $CH_3O(CH_2CH_2O)_g(CH_2)_3Si(OCH_2CF_2CF_3)_2(OCH_3)$, $CH_3O(CH_2CH_2O)_g(CH_2)_3Si(OCH(CF_3)_2)_2(OCH_3)$, $CH_3O(CH_2CH_2O)_g(CH_2)_3Si(OCH_2CH_2C_8F_{17})_2(OCH_3)$, $CH_3O(CH_2CH_2O)_g(CH_2)_3Si(OCH_2CF_2CF_3)_2(OH)$, $CH_3O(CH_2CH_2O)_g(CH_2)_3Si(OCH(CF_3)_2)_2(OH)$, $CH_3O(CH_2CH_2O)_g(CH_2)_3Si(OCH_2CH_2C_8F_{17})_2(OH)$, $CH_3O(CH_2CH_2O)_g(CH_2)_3Si(OCOCF_3)_3$, $CH_3O(CH_2CH_2O)_g(CH_2)_3Si(OCOC_2F_5)_3$, $CH_3O(CH_2CH_2O)_g(CH_2)_3Si(OCOC_8F_{17})_3$, $CH_3O(CH_2CH_2O)_g(CH_2)_3Si(OCOCF_3)_2(OCH_3)$, $CH_3O(CH_2CH_2O)_g(CH_2)_3Si(OCOC_2F_5)_2(OCH_3)$, $CH_3O(CH_2CH_2O)_g(CH_2)_3Si(OCOC_8F_{17})_2(OCH_3)$, wherein g is an integer of 1 to 100, $CH_2=C(CH_3)CO_2(CH_2)_3Si(OCH_2CF_3)_3$, $CH_2=C(CH_3)CO_2(CH_2)_3Si(OCH_2CF_2CF_3)_3$, $CH_2=C(CH_3)CO_2(CH_2)_3Si(OCH(CF_3)_2)_3$, $CH_2=C(CH_3)CO_2(CH_2)_3Si(OCH_2CH_2C_8F_{17})_3$, $CH_2=C(CH_3)CO_2(CH_2)_3Si(OCH_2CF_2CF_3)_2(OCH_3)$, $CH_2=C(CH_3)CO_2(CH_2)_3Si(OCH(CF_3)_2)_2(OCH_3)$, $CH_2=C(CH_3)CO_2(CH_2)_3Si(OCH_2CH_2C_8F_{17})_2(OCH_3)$, $CH_2=C(CH_3)CO_2(CH_2)_3Si(OCH_2CF_2CF_3)_2(OH)$, $CH_2=C(CH_3)CO_2(CH_2)_3Si(OCH(CF_3)_2)_2(OH)$, $CH_2=C(CH_3)CO_2(CH_2)_3Si(OCH_2CH_2C_8F_{17})_2(OH)$, $CH_2=C(CH_3)CO_2(CH_2)_3Si(OCOCF_3)_3$, $CH_2=C(CH_3)CO_2(CH_2)_3Si(OCOC_2F_5)_3$, $CH_2=C(CH_3)CO_2(CH_2)_3Si(OCOC_8F_{17})_3$, $CH_2=C(CH_3)CO_2(CH_2)_3Si(OCOCF_3)_2(OCH_3)$, $CH_2=C(CH_3)CO_2(CH_2)_3Si(OCOC_2F_5)_2(OCH_3)$, $CH_2=C(CH_3)CO_2(CH_2)_3Si(OCOC_8F_{17})_2(OCH_3)$, and the like.

Examples of the oligomer or cooligomer of the present invention are linear, branched, cyclic and three-dimensional oligomers or cooligomers.

In the present invention, the degree of polymerization of the oligomer or cooligomer is preferably from 2 to 1,000, more preferably 4 to 100. When the degree of polymerization is smaller, a boiling point of the oligomer or cooligomer is easily lowered, and the oligomer or cooligomer is easily vaporized at coating and is difficult to be incorporated into a coating film. When the degree of polymerization exceeds 1,000, there is a tendency that control of the degree of polymerization at synthesis is difficult, a viscosity of the oligomer or cooligomer easily becomes high and workability becomes inferior.

A GPC molecular weight of the oligomer and cooligomer of the present invention (a value converted to polystyrene by using tetrahydrofuran as an efluate) is preferably from 500 to 10,000, further preferably 1,000 to 5,000 in a weight average molecular weight. When the molecular weight is decreased, an effect of making hydrophilic is lowered and when the molecular weight exceeds 10,000, there is a tendency that at the time of synthesis and during storage, gelling occurs easily.

The organometallic compound represented by the formula (1) can be synthesized by reacting one or more of a metal halide, alkyl metal, metal alkoxide, metal chelate, and the like, said metal constituting the organometallic compound, with one or more of alcohol, carboxylic acid, oxime, β-diketone, β-keto ester, alkali metal alkoxide, alkali metal salt of carboxylic acid, and the like, said organic moieties corresponding to the organic group of the organometallic compound, with stirring usually at about 1 atm at a temperature of - 20° to 100°C, preferably 0° to 80°C or preferably under dried inert gas atmosphere, in the presence of a catalyst, if necessary. Also a reaction solvent can be used.

In such a synthesizing method, by adjusting the temperature to 0° to 200°C, preferably 20° to 100°C and adding water gradually to the organometallic compound of the formula (1) so that the reaction solution becomes as uniform as possible, the organometallic compound of the formula (1) reacts with water to be hydrolyzed and at nearly the same time, condensed to give an oligomer of the organometallic compound.

Also in the above-mentioned synthesizing method, use of at least two kinds of the organometallic compounds represented by the formula (1) can give a cooligomer. The cooligomer may contain two or more metals in its molecular chain.

The degree of polymerization of the oligomer or cooligomer of the present invention can be regulated with a mole ratio of reacting water to, for example, the organometallic compound of the formula (1). For example, when the reaction is carried out within the mole ratio of $[H_2O]$/[Organometallic compound of formula (1)] = 0.4 to 0.95, there can be obtained an oligomer or cooligomer having the degree of polymerization of about 2 to about 20. Also by adjusting the mole ratio within the range of 0.94 to 2.0, there can be obtained an oligomer or cooligomer having the degree of polymerization of more than 20. A ratio (mole ratio) of constructive units constituting a cooligomer obtained by using two kinds of organometallic compounds of the formula (1) is preferably from 1/9 to 9/1.

Examples of the catalyst are, for instance, acids and alkalis such as hydrochloric acid, sulfuric acid, acetic acid, paratoluene sulfonic acid, ammonia, trimethylamine, triethylamine, tributylamine, 1,8-diazabicyclo(5,4,0)undecene-7(DBU), (-)-sparteine, 4-N,N-dimethylaminopyridine, monoethanolamine, triethanolamine, N,N,N',N'-tetramethylethylenediamine, sodium hydroxide, potassium hydroxide, sodium hydrogencarbonate, potassium t-butoxide, sodium ethoxide, tetramethylammonium hydroxide, tetramethylammonium hydrogensulfate, tetrabutylammonium hydroxide and tetrabutylammonium hydrogensulfate; and organometallic compounds and organometallic salts such as dibutyltindilaurate, dibutyltinacetate, dioctyltinmaleate, tetraisopropyl titanate and tetrabutyl titanate. From a point that a residue of the catalyst is easily removed from a product, preferable are hydrochloric acid, ammonia and triethylamine.

Examples of the reaction solvent are alcohols such as methanol, ethanol, isopropanol, n-butanol, t-butanol, octanol, 2,2,2-trifluoroethanol and 2,2,3,3,3-pentafluoropropanol; ethers such as tetrahydrofuran, 1,4-dioxane and tetrahydropyran; ketones and esters such as acetone and 2-methoxyethyl acetate; amides such as N,N-dimethylformamide, N,N-dimethylacetamide, N-methylacetamide, N-methylpyrrolidone and polyoxazoline; carboxylic acids such as acetic acid, trifluoroacetic acid and $F(CH_2)_8COOH$; fluorine-containing aromatic compounds such as trifluoromethylbenzene and m-bis(trifluoromethyl)benzene; and the like. From the viewpoint of high solubility, 2,2,2-trifluoroethanol, 2,2,3,3,3-pentafluoropropanol, tetrahydrofuran, 1,4-dioxane and tetrahydropyran are preferable.

The organometallic compound of the formula (1), its oligomer or cooligomer comprising at least two of the organometallic compounds can provide a coating composition having excellent stain-proofing property, low electrostatically charging property and anti-haze property.

In the organometallic compound of the above-mentioned formula (1), its oligomer and cooligomer comprising at least two of the organometallic compounds, when at least one of $R^1$ and $R^2$ is $CF_3CHFCF_2CH_2$, $CF_3CHFCF_2CHCH_3$ or $CF_3CHFCF_2C(CH_3)_2$, for example, an effect of obtaining excellent surface concentrating property, repeatability of hydrophilic property of a coating film surface and anti-blocking property can be exhibited.

Also when a fluorine atom content in the organometallic compound of the formula (1), its oligomer or cooligomer comprising at least two of the organometallic compounds is at least 5 % by weight, preferably 15 to 60 % by weight, there can be obtained effects of, for example, excellent surface concentrating property and repeatability of surface hydrophilization of a coating film.

Further there can be obtained effects of, for example, excellent appearance, anti-sagging property and alkali resistance of a coating film when in the organometallic compound of the formula (1), its oligomer or the cooligomer comprising at least two of the organometallic compounds, a is 4, b and c are zero, M is Si and fluorine atom is contained.

The present invention also relates to the stain-proofing agent comprising the organometallic compound of the formula (1), its oligomer or cooligomer. When X in the formula (1) is a polymerizable group, a polymer or copolymer thereof is also useful as a stain-proofing agent.

The present invention also relates to the coating composition which comprises (A) the stain-proofing agent, (B) the resin for paints and (C) the curing agent and/or curing catalyst.

The coating film obtained from the composition of the present invention exhibits an effect of giving remarkably excellent stain-proofing property, low electrostatically charging property and anti-haze property.

Each of the components of the composition of the present invention and optional additives are explained below. Examples of the components which can be used are those described in WO97/11130.

Examples of the resin for paints are, for instance, a fluoroolefin copolymer having hydroxyl group and/or carboxyl group, acrylic polyol resin, acrylic silicon resin, fluorine-containing silicone resin, inorganic resin, homopolymer or copolymer of vinylidene fluoride containing no functional group, and the like which are solvent-soluble. The fluoroolefin copolymer having hydroxyl group and/or carboxyl group and acrylic polyol resin are preferred from a point that they have been widely used.

In addition to the above-mentioned resins, there are fluorine-containing resins having no functional group (such as a vinylidene fluoride homopolymer or copolymer disclosed in JP-B-43-10363, JP-A-3-28206 and JP-A-4-189879). The fluorine-containing resin can be blended in the above-mentioned resins having a functional group. When the resin having no functional group is used, it is not always necessary to use a curing agent and curing catalyst in the coating composition of the present invention.

Examples of the fluoroolefin copolymer having hydroxyl group and/or carboxyl group are, for instance, those disclosed in each of JP-B-60-21686, JP-A-3-121107, JP-A-4-279612, JP-A-4-28707 and JP-A-2-232221. A number average molecular weight of the copolymer (measured by GPC) is from 1,000 to 100,000, preferably 1,500 to 30,000. When the molecular weight is less than 1,000, curability and weather resistance tend to be insufficient, and when more than 100,000, there is a tendency that problems arise with respect to workability and coating procedures.

A hydroxyl value of the copolymer is from 0 to 200 (mgKOH/g), preferably 0 to 150 (mgKOH/g). When the hydroxyl value decreases, there is a tendency that curing failure is easy to occur, and when the hydroxyl value exceeds 200 (mgKOH/g), there is a tendency that problem arises with respect to flexibility of a coating film.

An acid value of the copolymer is from 0 to 200 (mgKOH/g), more preferably 0 to 100 (mgKOH/g). When the acid value decreases, there is a tendency that curing failure is easy to occur, and when the acid value exceeds 200 (mgKOH/g), there is a tendency that problem arises with respect to flexibility of a coating film.

As one of the above-mentioned copolymers, there can be used tetrafluoroethylene copolymer from the viewpoint of stain-proofing property, stain removable property and corrosion resistance.

Examples of the copolymer are those commercially available, for instance, Zeffle available from DAIKIN INDUSTRIES, LTD., Lumiflon available from Asahi Glass Kabushiki Kaisha, Cefral Coat available from Central Glass

Kabushiki Kaisha, Fluonate available from Dai Nippon Ink Kagaku Kogyo Kabushiki Kaisha, Zaflon available from Toa Gosei Kabushiki Kaisha, and the like.

Examples of the acrylic polyol resin are, for instance, a polymer comprising (a) a hydroxyl-containing ethylenically unsaturated monomer such as hydroxyl-containing (meth)acrylate, hydroxy vinyl ether or allyl alcohol and (b) an unsaturated monomer having no hydroxyl such as olefins having no hydroxyl, vinyl ether, allyl ether, vinyl ester, propenyl ester, (meth)acrylate, aromatic vinyl compound, (meth)acrylonitrile, carboxyl-containing unsaturated monomer, epoxy-containing unsaturated monomer or amino-containing unsaturated monomer.

As mentioned above, the acrylic polyol resin may have hydroxyl group, carboxyl group, epoxy group or amino group.

A hydroxyl value of the acrylic polyol resin is from 0 to 200 (mgKOH/g), preferably 0 to 100 (mgKOH/g). When the hydroxyl value decreases, curing failure tends to occur easily, and when the hydroxyl value exceeds 200 (mgKOH/g), there is a tendency that problem arises with respect to flexibility of a coating film.

An acid value of the acrylic polyol resin is from 0 to 200 (mgKOH/g), preferably 0 to 100 (mgKOH/g). When the acid value decreases, curing failure tends to occur easily, and when the acid value exceeds 200 (mgKOH/g), there is a tendency that problem arises with respect to flexibility of a coating film.

As a commercially available acrylic polyol resin, there can be used, for example, Dianal available from Mitsubishi Rayon Kabushiki Kaisha, Acrydic available from Dai Nippon Ink Kagaku Kogyo Kabushiki Kaisha, Hitaloid available from Hitachi Kasei Kogyo Kabushiki Kaisha, Olester available from Mitsui Toatsu Kagaku Kabushiki Kaisha, or the like.

The acrylic silicon resin may be, for example, one prepared by polymerizing the acrylic silicon monomer having, in one molecule thereof, at least one silane group and a radically polymerizable unsaturated group, with (a) the above-mentioned hydroxyl-containing ethylenically unsaturated monomer and/or (b) an unsaturated monomer having no hydroxyl.

The acrylic silicon resin may have a hydrolyzable silyl group, hydroxyl or epoxy.

As a commercially available acrylic silicon resin, there can be used, for example, Gemlac available from Kaneka Corporation, Kuriyamer available from Sanyo Kasei Kogyo Kabushiki Kaisha, or the like.

In the present invention, as the above-mentioned resin for paints, there can be used inorganic materials such as a non-fluorine-containing metal (Si, Ti, Al, etc.) alkoxide containing non-hydrolyzable group, a non-fluorine-containing organopolysiloxane containing non-hydrolyzable group and a metal (Si, Ti, Al, etc.) alkoxide having no fluorine atom.

As a commercially available inorganic material, there can be used, for example, Ecolton available from Gunze Sangyo Kabushiki Kaisha, Glaska available from Nippon Gosei Rubber Kabushiki Kaisha, Porcelin available from Tohpe Kabushiki Kaisha, Bell Clean and Bell Hard available from NOF CORPORATION, SH, SR and DC Series available from Toray Dow Corning Silicone Kabushiki Kaisha, KR Series available from Shin-Etsu Kagaku Kogyo Kabushiki Kaisha, Planeact available from Ajinomoto Kabushiki Kaisha, organotitanate available from Nippon Soda Kabushiki Kaisha, aluminum alcolate and aluminum chelate compound available from Kawaken Fine Chemical Kabushiki Kaisha, zirconium alkoxide available from Hokko Kagaku Kogyo Kabushiki Kaisha, modified silicone oil and MMCA available from Nippon Yunicar Company Limited, or the like.

Examples of the fluorine-containing silicone resin are, for instance, those disclosed in JP-A-4-279612, and the like.

As the curing agent, there is, for instance, an isocyanate compound, blocked isocyanate compound, melamine resin, dibasic acid, silane compound containing non-hydrolyzable group, epoxy resin, acid anhydride, or the like. From the viewpoint of weather resistance and acid rain resistance, preferable are isocyanate, blocked isocyanate and epoxy resin.

Examples of the isocyanate compound and blocked isocyanate compound are, for instance, 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, n-pentane-1,4-diisocyanate, trimers thereof, adducts and biurets thereof, polymers thereof having at least two isocyanate groups, blocked isocyanates, and the like. The isocyanate compound and blocked isocyanate compound are not limited to them.

A mixing ratio of the isocyanate to the resin for paints is preferably from 0.5 to 5.0 in NCO/OH (mole ratio), further preferably 0.8 to 1.2. When the isocyanate is of moisture curing type, 1.1 to 1.5 is preferred.

Non-restricted examples of the melamine resin are, for instance, a melamine resin, a methylolated melamine resin obtained by methylolating melamine, an alkyl-etherified melamine resin obtained through etherification of a methylolated melamine by an alcohol such as methanol, ethanol or butanol, and the like.

Non-restricted examples of the epoxy compound are, for instance,

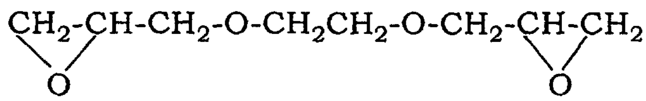 ,

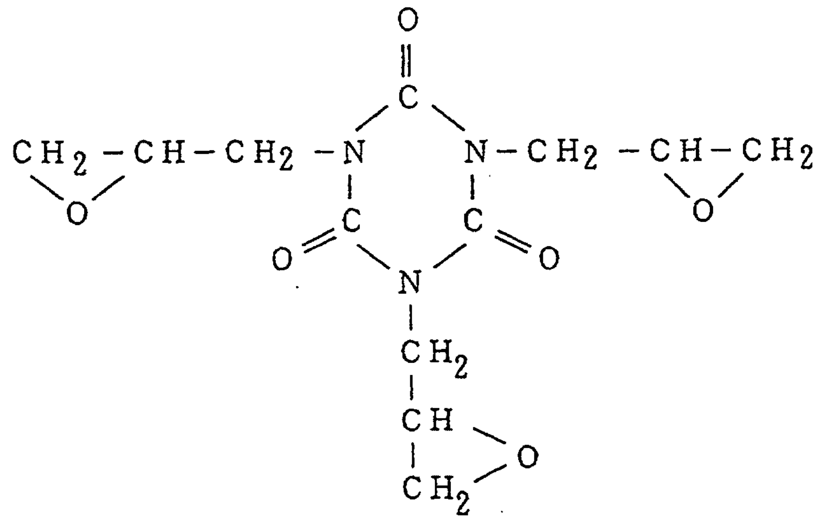

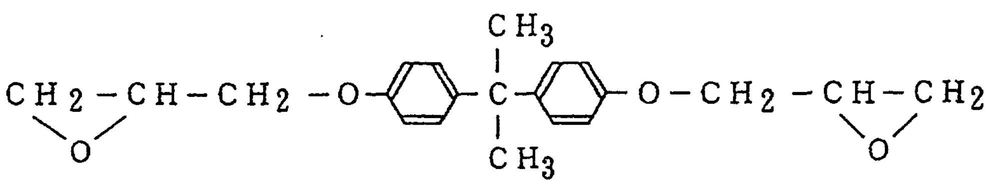

and the like.

Non-restricted examples of the acid anhydride are, for instance, phthalic anhydride, trimellitic anhydride, pyromellitic anhydride, 1,2-cyclohexyldicarboxylic anhydride, succinic anhydride, maleic anhydride, and the like.

Dibasic acids such as fumaric acid, succinic acid, adipic acid, azelaic acid, sebacic acid, dodecanedioic acid and 1,2-cyclohexyldicarboxylic acid are also used as the curing agent.

Examples of the curing catalyst are, for instance, organotin compound, organic acidic phosphate, organotitanate compound, reaction product of acidic phosphate and amine, saturated or unsaturated polycarboxylic acid or its acid anhydride, organic sulfonic acid, amine compound, aluminum chelate compound, titanium chelate compound, zirconium chelate compound, and the like.

The curing catalyst may be used alone or in combination of two or more. Preferable curing catalysts are an organotin compound and aluminum chelate compound.

In the present invention, combination of the resin for paints and the curing agent and/or curing catalyst is not particularly limited. Examples of the preferred combination are those mentioned below.

In case of the acrylic polyol resin or the fluoroolefin copolymer having hydroxyl group and/or carboxyl group, when they contain hydroxyl group, the curing agent is the isocyanate compound, blocked isocyanate compound or melamine resin, and when they contain carboxyl group, the curing agent is the melamine resin or epoxy compound. In these systems, the curing catalyst can be used together.

In case of the acrylic silicon resin, fluorine-containing silicone resin or inorganic material, the curing catalyst may be used.

With respect to a mixing amount of the resin for paint and the stain-proofing agent, an amount of the stain-proofing agent is from 0.1 to 50 parts by weight, preferably 1 to 30 parts by weight based on 100 parts by weight of the resin for paints. When the amount is less than 0.1 part by weight, stain-proofing property tends to be lowered, and when the amount exceeds 50 parts by weight, there is a tendency that appearance of a coating film becomes poor and compatibility with the resin is lowered.

In the present invention, an organic solvent can be mixed to the above-mentioned coating composition.

Examples of the organic solvent are, for instance, hydrocarbon solvent such as xylene, toluene, Solvesso 100, Solvesso 150 or hexane; ester solvent such as methyl acetate, ethyl acetate, butyl acetate, ethylene glycol monomethyl acetate, ethylene glycol monoethyl acetate, ethylene glycol monobutyl acetate, diethylene glycol monomethyl acetate, diethylene glycol monoethyl acetate, diethylene glycol monobutyl acetate, ethylene glycol acetate or diethylene glycol acetate; ether solvent such as dimethyl ether, diethyl ether, dibutyl ether, ethylene glycol monomethyl ether, ethylene glycol monoethyl ether, ethylene glycol monobutyl ether, ethylene glycol dimethyl ether, ethylene glycol diethyl ether, ethylene glycol dibutyl ether, diethylene glycol monomethyl ether, diethylene glycol monoethyl ether, diethylene glycol monobutyl ether, diethylene glycol dimethyl ether, diethylene glycol diethyl ether, diethylene glycol dibutyl ether or tetrahydrofuran; ketone solvent such as methyl ethyl ketone, methyl isobutyl ketone or acetone; amide solvent such as N,N-dimethylacetamide, N-methylacetamide, acetamide, N,N-dimethylformamide, N,N-diethylformamide or N-methylformamide; sulfonic acid ester solvent such as dimethylsulfoxide; alcohol solvent such as methanol, ethanol, isopropanol, butanol, ethylene glycol, diethylene glycol, polyethylene glycol (degree of polymerization: 3 to 100), $CF_3CH_2OH$, $F(CF_2)_2CH_2OH$, $(CF_3)_2CHOH$, $F(CF_2)_3CH_2OH$, $F(CF_2)_4C_2H_5OH$, $H(CF_2)_2CH_2OH$, $H(CF_2)_3CH_2OH$ or $H(CF_2)_4CH_2OH$; and the like. From the viewpoint of compatibility, appearance of the coating film and storage stability, preferable are alcohol solvents such as lower alcohol and lower fluorine-containing alcohol.

With respect to a mixing amount of the resin for paints and the alcohol solvent, an amount of the alcohol solvent is from 1 to 50 parts by weight based on 100 parts by weight of the resin for paints, preferably from 1 to 25 parts by weight from the viewpoint of curability and appearance of a coating film.

When the curing agent has high reactivity with alcohol like a room temperature curing type isocyanate, the amount of the alcohol solvent is further preferably from 1 to 15 parts by weight, and the preferred alcohol is a secondary or tertiary alcohol.

The coating composition of the present invention is excellent in solvent solubility, and a formed coating film has high weather resistance and is excellent in stain-proofing property, chemical resistance, optical properties, mechanical properties, adhesion to substrates, resistance to yellowing due to heat, etc. Like usual curing compositions, the coating composition of the present invention can be applied as paints for indoor use for building materials and interior materials or for outdoor use for building materials, cars, airplanes, ships, trains, etc., directly on metals, concrete or plastics or on a primer paint such as wash primer, rust preventive paint, epoxy resin paint, acrylic resin paint and polyester resin paint, and further can be used as a sealing agent and film forming agent.

The above-mentioned composition can be used in various manners, for example, in clear finish, in solid form and in blend with a filler.

Various coating methods can be employed, for example, spray coating, brush coating, roller coating, curtain flow and dip coating.

To the coating composition of the present invention can be added additives for paints, for example, pigment, pigment dispersing agent, thickener, leveling agent, anti-foaming agent, auxiliary for film forming, ultraviolet ray absorber, HALS, flatting agent, filler, colloidal silica, fungus preventing agent, silane coupling agent, anti-skinning agent, antioxidant, flame retardant, anti-drip agent, anti-static agent, rust preventing agent, water soluble resin (polyvinyl alcohol, polyethylene oxide, etc.), and the like.

For example, when a proper anti-foaming agent is blended, anti-forming property is enhanced without lowering hydrophilic property of a coating film surface remarkably. Examples of the proper anti-foaming agent are, for instance, a siloxane anti-foaming agent such as siloxane modified with a long chain fluoroalkyl group of Zeffle GH-200 (available from DAIKIN INDUSTRIES, LTD.), fluorosilicone anti-foaming agent such as FA-600 and FS-1265 (available from Shin-Etsu Kagaku Kogyo Kabushiki Kaisha), silicon compound anti-foaming agent, silicone anti-foaming agent, acrylic anti-foaming agent, and the like.

The coating composition of the present invention can be applied on various substrates. Examples of the substrate are, for instance, those made of metal, cement, plastic, etc.

Examples of the metal substrate are, for instance, iron and chemically treated or plated iron, aluminum and chemically treated aluminum, stainless steel and chemically treated stainless steel, and the like.

Examples of the cement substrate are, for instance, cement, lime, gypsum, concrete, cement mortar, asbestos slate, gypsum board, and the like.

Examples of the plastic substrate are, for instance, polyvinyl chloride, polyester, polycarbonate, acryl, polyolefin, polystyrene, polyurethane, polyamide, nylon, natural rubber, urethane rubber, ABS resin, and the like.

In case of the metal substrate, it is preferable from the viewpoint of corrosion resistance and intercoat adhesion that the coating composition of the present invention is applied after applying, for example, under coat paint and intermediate coat paint as mentioned below.

As the under coat paint, a zinc rich paint is preferred.

Examples of other preferred under-coat paints and intermediate coat paints are paints obtained by adding a usually employed coloring pigment, extended pigment, antisettling agent, dispersing agent, curing agent, curing accelerator, thinner, solvent, etc. to at least one synthetic resin selected from epoxy resin (including tar-or urethane-modified one), vinyl resin (including tar-modified resin and acrylic resin), chlorinated rubber, polyurethane resin and phenol resin, and then kneading.

Also in case of the plastic substrate, the coating composition of the present invention can be applied after the application of the under coating and intermediate coating as used in the metal substrate and cement substrate.

Among the plastic substrates, in case of a plastic film and sheet, there are applying methods, for example, gravure roll coating, doctor blade coating, roll coating, reverse roll coating, air knife coating, etc. In those applying methods, a suitable coating thickness is from 1 to 20 μm, preferably 1 to 10 μm from the viewpoint of appearance of a coating film and coatability.

Examples of uses of articles coated with the coating composition of the present invention are, for instance, water-proof sheet for building, water-proof sheet for tunnel, polyvinyl sheet for agriculture, polyvinyl film for agriculture, covering sheet, protection sheet for building, protection sheet for train, mesh sheet, mesh screen, polycarbonate roof, acryl board wall, polycarbonate wall, guardrail, traffic signal, inner wall of tunnel, inner plate for tunnel, road sign, guidance plate, side wall of highway, sound-isolation wall for highway, road light, bridge beam, bridge girder, bridge pier, chimney, wall paper, tatami-mat, floor mat, table cloth, ventilation fan, marking film, geo-membrane, advertisement board, mail box, electric-light pole, tent, car, airplane, ship, train, and the like.

The present invention is then explained concretely by means of examples and preparation examples, but is not limited thereto. Hereinafter "part" and "%" represent part by weight and % by weight, respectively.

PREPARATION EXAMPLE 1

A 1-liter four neck flask equipped with a thermometer, stirrer, reflux column and dropping funnel was charged with 520 g of MKC SILICATE MS56 (available from Mitsubishi Chemical Co., Ltd.). Thereto was added dropwise a mixture of 5.42 g of 35 % aqueous solution of hydrochloric acid and 280 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 717 g. According to $^1$H-NMR analysis of the product, a mole ratio (Rf/Me) of $CF_3CHFCF_2CH_2$ group (Rf) to methyl group (Me) was 0.16.

PREPARATION EXAMPLE 2

A 1-liter four neck flask equipped with a thermometer, stirrer, reflux column and dropping funnel was charged with 520 g of MKC SILICATE MS56 (available from Mitsubishi Chemical Co., Ltd.). Thereto was added dropwise a mixture of 1.14 g of triethylamine and 550 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 814 g. According to $^1$H-NMR analysis of the product, a mole ratio (Rf/Me) of $CF_3CHFCF_2CH_2$ group (Rf) to methyl group (Me) was 0.38.

PREPARATION EXAMPLE 3

A 1-liter four neck flask equipped with a thermometer, stirrer, reflux column and dropping funnel was charged with 520 g of MKC SILICATE MS51 (available from Mitsubishi Chemical Co., Ltd.). Thereto was added dropwise a mixture of 5.42 g of 35 % aqueous solution of hydrochloric acid and 550 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 802 g. According to $^1$H-NMR analysis of the product, a mole ratio (Rf/Me) of $CF_3CHFCF_2CH_2$ group (Rf) to methyl group (Me) was 0.36.

PREPARATION EXAMPLE 4

A 1-liter four neck flask equipped with a thermometer, stirrer, reflux column and dropping funnel was charged with 520 g of MKC SILICATE MS56S (available from Mitsubishi Chemical Co., Ltd.). Thereto was added dropwise a mixture of 5.42 g of 35 % aqueous solution of hydrochloric acid and 830 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 825 g. According to $^1$H-NMR analysis of the product, a mole ratio (Rf/Me) of

$CF_3CHFCF_2CH_2$ group (Rf) to methyl group (Me) was 0.37.

PREPARATION EXAMPLE 5

A 1-liter four neck flask equipped with a thermometer, stirrer, reflux column and dropping funnel was charged with 520 g of MKC SILICATE MS56 (available from Mitsubishi Chemical Co., Ltd.). Thereto was added dropwise a mixture of 5.42 g of 35 % aqueous solution of hydrochloric acid and 670 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 810 g. According to $^1$H-NMR analysis of the product, a mole ratio (Rf/Me) of $CF_3CHFCF_2CH_2$ group (Rf) to methyl group (Me) was 0.35.

PREPARATION EXAMPLE 6

A 1-liter four neck flask equipped with a thermometer, stirrer, reflux column and dropping funnel was charged with 520 g of MKC SILICATE MS51 (available from Mitsubishi Chemical Co., Ltd.). Thereto was added dropwise a mixture of 1.14 g of triethylamine and 550 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 810 g. According to $^1$H-NMR analysis of the product, a mole ratio (Rf/Me) of $CF_3CHFCF_2CH_2$ group (Rf) to methyl group (Me) was 0.35.

PREPARATION EXAMPLE 7

A 1-liter four neck flask equipped with a thermometer, stirrer, reflux column and dropping funnel was charged with 520 g of MKC SILICATE MS51 (available from Mitsubishi Chemical Co., Ltd.). Thereto was added dropwise a mixture of 0.44 g of 97 % sulfuric acid and 550 g of 1H, 1H, 3H-hexafluorobutanol ($CF_3CHFCF_2CH_2OH$, containing 2-trifluoromethyl-2,3,3-trifluoropropanol) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 828 g. Then 200 ml of Diaion WA-21 (nonionic ion-exchanged resin available from Mitsubishi Chemical Co., Ltd.) was filled in the column and washed with 600 ml of methanol and further with 1H, 1H, 3H-hexafluorobutanol. Then the reaction mixture was passed therethrough for deoxidation treatment. According to $^1$H-NMR analysis of the product subjected to deoxidation treatment, a mole ratio (Rf/ Me) of $CF_3CHFCF_2CH_2$ group (Rf) to methyl group (Me) was 0.37.

PREPARATION EXAMPLE 8

A 1-liter four neck flask equipped with a thermometer, stirrer, reflux column and dropping funnel was charged with 520 g of MKC SILICATE MS51 (available from Mitsubishi Chemical Co., Ltd.) and 1,580 g of $CF_3(CF_2)_7C_2H_4OH$, and the mixture was heated up gradually with stirring, followed by refluxing at 120°C for two hours. Then heating up was carried out so that the inside temperature became 150° to 180°C and the refluxed component was distilled over 12 hours. Yield of the product was 1,940 g. According to $^1$H-NMR analysis of the product, a mole ratio (Rf/Me) of $CF_3(CF_2)_7C_2H_4$ group (Rf) to methyl group (Me) was 0.48, and there was an effect of.inhibiting foaming.

COMPARATIVE PREPARATION EXAMPLE 1

A 1-liter four neck flask equipped with a thermometer, stirrer, reflux column and dropping funnel was charged with 520 g of MKC SILICATE MS56. Thereto was added dropwise a mixture of 1.14 g of triethylamine and 550 g of 2,2,3,3,3-pentafluoropropanol ($CF_3CF_2CH_2OH$)gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. According to $^1$H-NMR analysis of the product, a mole ratio (Rf/Me) of $CF_3CF_2CH_2$ group (Rf) to methyl group (Me) was 0.30.

COMPARATIVE PREPARATION EXAMPLE 2

A 1-liter four neck flask equipped with a thermometer, stirrer, reflux column and dropping funnel was charged

with 520 g of MKC SILICATE MS56. Thereto was added dropwise a mixture of 1.14 g of triethylamine and 500 g of 2,2,3,3,4,4,5,5-octafluoropentanol ($CHF_2CF_2CF_2CF_2CH_2OH$) gradually over 30 minutes through the dropping funnel with stirring. Further the reaction mixture was heated up with stirring, followed by two-hour refluxing. Then the refluxed component was distilled over one hour. A temperature of the reaction mixture was finally increased to 150°C. Yield of the product was 880 g. According to $^1H$-NMR analysis of the product, a mole ratio (Rf/Me) of $CHF_2CF_2CF_2CF_2CH_2$ group (Rf) to methyl group (Me) was 0.20.

EXAMPLE 1

To 208 parts of Zeffle GK-500 (available from DAIKIN INDUSTRIES, LTD., hydroxyl value: 60, number average molecular weight: 12,000, butyl acetate solution, solid content: 60 %) were added 250 parts of CR-95 (titanium oxide available from Ishihara Sangyo Kabushiki Kaisha), 100 parts of butyl acetate and 800 parts of glass beads. The mixture was stirred for dispersing at 1,500 rpm for one hour with a portable grinder (three-blade type). The glass beads were removed by filtration to give 429.4 parts of a dispersion. Thereto were added 224.7 parts of Zeffle GK-500 and 115.4 parts of butyl acetate, followed by mixing sufficiently to give a white paint (pigment/resin = 0.833 in weight ratio, hereinafter referred to as "GK-500 white paint").

To 100 parts of GK-500 white paint were added 3.0 parts of the oligomer prepared in Preparation Example 1 (10 parts based on 100 parts of fluorine-containing resin), 12.7 parts of Takenate D-140N (isophorone diisocyanate type curing agent available from Takeda Chemical Industries, Ltd.) (NCO/OH = 1) and 80 parts of butyl acetate, followed by mixing sufficiently to give the coating composition of the present invention.

The obtained coating composition was applied by spray coating on an aluminum plate (0.5 mm thick) subjected to chemical conversion treatment, and cured by drying at room temperature for one week to give a coated plate having a coating thickness of about 40 μm.

Then a gloss and pencil hardness of the coated plate were evaluated by the following methods. The results are shown in Table 1. Gloss: Specular gloss at 60° was measured according to JIS K-5400. Pencil hardness: Measured according to JIS K-5400.

The above-mentioned coated plate was exposed being inclined at an angle of 30° and faced toward southern direction on a roof of 3-storied building in Osaka Prefecture. A water contact angle after exposure for one week was measured and stain-proofing property and appearance of a coating film were evaluated after the exposure for one month, three months and six months, respectively. The results are shown in Table 1.

With respect to the stain-proofing property, a difference ($\Delta L^*$) between an initial lightness and a lightness after the exposure was measured. The stain-proofing property of the coated plate was evaluated as "A" when $\Delta L^*$ is not less than 0 and less than 2; "B" when $\Delta L^*$ is not less than 2 and less than 4; "C" when $\Delta L^*$ is not less than 4 and less than 7; "D" when $\Delta L^*$ is not less than 7 and less than 10; and "E" when $\Delta L^*$ is not less than 10. The appearance of the coated plate was checked with naked eyes and evaluated as "A" when there is no abnormalities; "B" when gloss is somewhat faded; "C" when there is an abnormality, and if evaluation is C, content of abnormality is mentioned together.

Also the above-mentioned coating composition was applied by spray coating on an aluminum plate (1.0 mm thick) subjected to chemical conversion treatment and dried forcedly at 80°C over three hours to give a coated plate. The given number of coated plates were allowed to stand in a thermo-hygrostat (35°C, 98 % RH), and a water contact angle and blocking property were checked every three hours. The results are shown in Table 2.

The water contact angle was evaluated as × (not good) in case of not less than 60 degrees; ○ (good) in case of not less than 30 degrees and less than 60 degrees; and ◎ (excellent) in case of less than 30 degrees.

Two coated plates taken out of the thermo-hygrostat were overlaid with each other so that the coated surfaces faced with each other, and a load of 1 kg was placed thereon. After allowing to stand at 35°C for one hour, the plates were separated by hand to check a degree of adherence. Thus the blocking property was evaluated as A when the plates were adhered slightly; B when the plates were adhered to some degree; and C when the plates were adhered strongly.

EXAMPLE 2

To 100 parts of GK-500 white paint prepared in the same manner as in Example 1 were added 3.0 parts of the oligomer prepared in Preparation Example 2 (10 parts based on 100 parts of fluorine-containing resin), 12.7 parts of Takenate D-140N (NCO/OH = 1) and 80.0 parts of butyl acetate, followed by mixing sufficiently to give the coating composition.

The obtained coating composition was applied by spray coating on an aluminum plate (0.5 mm thick) subjected to chemical conversion treatment, and cured by drying at room temperature for one week to give a coated plate having a coating thickness of about 40 μm. Then a gloss, pencil hardness, stain-proofing property and appearance of the coated plate were evaluated in the same manner as in Example 1. The results are shown in Table 1.

EXAMPLE 3

A white paint was prepared in the same manner as in Example 1 by using Acrydic A-801 (acrylic polyol resin available from Dai Nippon Ink Kagaku Kogyo Kabushiki Kaisha) instead of Zeffle GK-500. To 100 parts of the white paint were added 3.0 parts of the oligomer prepared in Preparation Example 1 (10 parts based on 100 parts of acrylic polyol resin), 9.6 parts of CORONATE HX (HDI type isocyanate curing agent available from Nippon Polyurethane Industry Co., Ltd.) (NCO/OH = 1) and 80.0 parts of butyl acetate, followed by mixing sufficiently to give the coating composition.

The obtained coating composition was applied by spray coating on an aluminum plate (0.5 mm thick) subjected to chemical conversion treatment, and cured by drying at room temperature for one week to give a coated plate having a coating thickness of about 40 μm. Then a gloss, pencil hardness, stain-proofing property and appearance of the coated plate were evaluated in the same manner as in Example 1. The results are shown in Table 1.

EXAMPLE 4

To 250 parts of Gemlac YC3623 (acrylic silicon resin available from Kaneka Corporation) (butyl acetate solution, solid content: 50 %) were added 250 parts of CR-95, 100 parts of butyl acetate, 10.0 parts of $HC(OCH_3)_3$ as a dehydrating agent and 800 parts of glass beads. The mixture was stirred for dispersing at 1,500 rpm for one hour with a portable grinder (three-blade type). The glass beads were removed by filtration to give 400.1 parts of a dispersion. Thereto were added 256.7 parts of Gemlac YC3623 and 36.7 parts of butyl acetate, followed by mixing sufficiently to give a white paint (pigment/resin = 0.833 in weight ratio, hereinafter referred to as "YC3623 white paint").

To 100 parts of the YC3623 white paint were added 3.0 parts of the oligomer prepared in Preparation Example 1 (10 parts based on 100 parts of acrylic silicon resin), 0.15 part of 1 % butyl acetate solution of dibutyltindilaurate and 80 parts of butyl acetate, followed by mixing sufficiently to give the coating composition of the present invention.

The obtained coating composition was applied by spray coating on an aluminum plate (0.5 mm thick) subjected to chemical conversion treatment, and cured by drying at room temperature for one week to give a coated plate having a coating thickness of about 40 μm. Then a gloss, pencil hardness, stain-proofing property and appearance of the coated plate were evaluated in the same manner as in Example 1. The results are shown in Table 1.

EXAMPLE 5

100 Parts of Zeffle LC-974 (a varnish for coating comprising a vinylidene fluoride copolymer and an acrylic resin and being available from DAIKIN INDUSTRIES, LTD.) and 150 parts of butyl acetate were mixed, and further 3.8 parts of the oligomer prepared in Preparation Example 1 was added thereto, followed by mixing sufficiently to give a coating composition.

The obtained coating composition was applied by spray coating on a AM-712-treated aluminum plate (0.5 mm thick) subjected to under coating with a fluorine-containing resin paint (white) and cured by drying at room temperature for one week to give a coated plate having a coating thickness of about 40 μm. Then a gloss, pencil hardness, stain-proofing property and appearance of the coated plate were evaluated in the same manner as in Example 1. The results are shown in Table 1.

EXAMPLE 6

To 100 parts of Ecolton A-3 (clear varnish for inorganic coating available from Gunze Sangyo Kabushiki Kaisha) were added 10.0 parts of the oligomer prepared in Preparation Example 1, 10 parts of a specific curing agent and 20.0 parts of butyl acetate, followed by mixing sufficiently to give a coating composition.

The obtained coating composition was applied by spray coating on an aluminum plate (0.5 mm thick) subjected to chemical conversion treatment and under coating (about 50 μm thick) with GK-500 white paint (Takenate D-140N), and cured by drying at room temperature for one week to give a coated plate having a coating thickness of about 40 μm. Then a gloss, pencil hardness, stain-proofing property and appearance of the coated plate were evaluated in the same manner as in Example 1. The results are shown in Table 1.

EXAMPLE 7

To 154 parts of Zeffle GK-500 and 79 parts of Zeffle GK-510 (available from DAIKIN INDUSTRIES, LTD., hydroxyl value: 60, number average molecular weight: 12,000, butyl acetate solution, solid content: 50 %) were added 263 parts of CR-95, 136 parts of butyl acetate and 800 parts of glass beads. The mixture was stirred for dispersing at 1,500 rpm for one hour with a portable grinder (three-blade type). The glass beads were removed by filtration to give

486 parts of a dispersion. Thereto were added 165 parts of Zeffle GK-500, 85 parts of Zeffle GK-510 and 33 parts of butyl acetate, followed by mixing sufficiently to give a white paint (pigment/resin = 0.833 in weight ratio, solid content of resin: 31.6 %, hereinafter referred to as "GK-500/GK-510 white paint").

To 100 parts of GK-500/GK-510 white paint were added 3.2 parts of the oligomer prepared in Preparation Example 3 (10 parts based on 100 parts of fluorine-containing resin), 19 parts of BL-4265 (IPDI type blocked isocyanate curing agent available from Sumitomo Bayer Urethane Kabushiki Kaisha) (NCO/OH = 1.0) and 80 parts of butyl acetate, followed by mixing sufficiently to give the coating composition of the present invention.

The obtained coating composition was applied by spray coating on an aluminum plate (0.5 mm thick) subjected to chemical conversion treatment. Then after setting at room temperature for 10 minutes, the coated plate was cured by drying at 170°C for 20 minutes with a hot air dryer to give a coated plate having a coating thickness of about 40 µm. Then a gloss, pencil hardness, stain-proofing property and appearance of the coated plate were evaluated in the same manner as in Example 1. The results are shown in Table 1.

EXAMPLE 8

To 100 parts of GK-500/GK-510 white paint prepared in the same manner as in Example 7 were added 3.2 parts of the oligomer prepared in Preparation Example 3 (10 parts based on 100 parts of fluorine-containing resin), 3.3 parts of LTI (lysine isocyanate curing agent available from Kyowa Hakko Kabushiki Kaisha) (NCO/OH = 1.0), 1.6 parts of KBE-9007 (isocyanate silane coupling agent available from Shin-Etsu Kagaku Kogyo Kabushiki Kaisha) (5 parts based on 100 parts of fluorine-containing resin), 0.95 part of siloxane defoaming agent prepared in Preparation Example 8 (3 parts based on 100 parts of fluorine-containing resin), 0.03 part of FA-600 (fluorosilicone type defoaming agent available from Shin-Etsu Kagaku Kogyo Kabushiki Kaisha) (0.1 part based on 100 parts of fluorine-containing resin) and 80 parts of butyl acetate, followed by mixing sufficiently to give the coating composition of the present invention.

The obtained coating composition was applied by spray coating on an aluminum plate (0.5 mm thick) subjected to chemical conversion treatment and cured by drying at room temperature for one week to give a coated plate having a coating thickness of about 40 µm. Then a gloss, pencil hardness, stain-proofing property and appearance of the coated plate were evaluated in the same manner as in Example 1. The results are shown in Table 1.

EXAMPLE 9

A coating composition was prepared and coated in the same manner as in Example 7 except that the oligomer prepared in Preparation Example 5 was used instead of the oligomer prepared in Preparation Example 3. Thus a coated plate was produced. Then a gloss, pencil hardness, stain-proofing property and appearance of the coated plate were evaluated in the same manner as in Example 1. The results are shown in Table 1.

EXAMPLE 10

A coating composition was prepared and coated in the same manner as in Example 7 except that the oligomer prepared in Preparation Example 6 was used instead of the oligomer prepared in Preparation Example 3. Thus a coated plate was produced. Then a gloss, pencil hardness, stain-proofing property and appearance of the coated plate were evaluated in the same manner as in Example 1. The results are shown in Table 1.

EXAMPLE 11

A coating composition was prepared and coated in the same manner as in Example 8 except that the oligomer prepared in Preparation Example 4 was used instead of the oligomer prepared in Preparation Example 3. Thus a coated plate was produced. Then a gloss, pencil hardness, stain-proofing property and appearance of the coated plate were evaluated in the same manner as in Example 1. The results are shown in Table 1.

EXAMPLE 12

A coating composition was prepared and then coated in the same manner as in Example 8 except that the oligomer prepared in Preparation Example 7 was used instead of the oligomer prepared in Preparation Example 3. Thus a coated plate was produced. Then a gloss, pencil hardness, stain-proofing property and appearance of the coated plate were evaluated in the same manner as in Example 1. The results are shown in Table 1.

COMPARATIVE EXAMPLE 1

A white paint was prepared and coated in the same manner as in Example 1 except that the oligomer prepared in Preparation Example 1 was not used. Thus a coated plate was produced. Then a gloss, pencil hardness, stain-proofing property and appearance of the coated plate were evaluated in the same manner as in Example 1. The results are shown in Table 1.

COMPARATIVE EXAMPLES 2 to 3

White paints were prepared and coated in the same manner as in Example 1 except that the oligomers prepared in Comparative Preparation Example 1 (Comparative Example 2) and Comparative Preparation Example 2 (Comparative Example 3), respectively were used instead of the oligomer prepared in Preparation Example 1. Thus coated plates were produced. Then a water contact angle and blocking property were evaluated in the same manner as in Example 1. The results are shown in Table 1.

TABLE 1

| | Gloss | Pencil hardness | Stain-proofing property | | | Appearance | | |
|---|---|---|---|---|---|---|---|---|
| | | | 1 month after | 3 months after | 6 months after | 1 month after | 3 months after | 6 months after |
| Ex. 1 | 80 | H | A | A | A | A | A | A |
| Ex. 2 | 79 | H | A | A | A | A | A | A |
| Ex. 3 | 85 | 2H | A | A | A | A | A | A |
| Ex. 4 | 83 | H | A | A | A | A | A | A |
| Ex. 5 | 81 | F | A | A | A | A | A | A |
| Ex. 6 | 90 | 2H | A | A | A | A | A | A |
| Ex. 7 | 85 | H | A | A | A | A | A | A |
| Ex. 8 | 82 | H | A | A | A | A | A | A |
| Ex. 9 | 83 | H | A | A | A | A | A | A |
| Ex. 10 | 84 | H | A | A | A | A | A | A |
| Ex. 11 | 75 | H | A | A | A | A | A | A |
| Ex. 12 | 73 | H | A | A | A | A | A | A |
| Com. Ex. 1 | 78 | H | C | D | E | A | A | A |

TABLE 2

| | Initial | | 3 Hours after | | 6 Hours after | | 9 Hours after | |
|---|---|---|---|---|---|---|---|---|
| | Contact angle (degree) | Blocking property | Contact angle (degree) | Blocking property | Contact angle (degree) | Blocking property | Contact angle (degree) | Blocking property |
| Ex. 1 | × (90) | A | × (80) | A | ○ (50) | B | ◎ (20) | C |
| Com. Ex. 2 | × (92) | A | ○ (40) | C | ◎ (20) | C | ◎ (20) | C |
| Com. Ex.3 | × (95) | A | × (88) | A | × (70) | B | ○ (40) | C |

INDUSTRIAL APPLICABILITY

The novel organometallic compound of the present invention, its oligomer and cooligomer have a stain-proofing property, and when made into a coating composition, can provide a coating film which early exhibits an effect of preventing adherence of stain.

## Claims

1. An organometallic compound represented by the formula (1):

$$X_bM(OR^1)_aR_c^2 \quad (1)$$

wherein a is 0 or an integer of 1 to 6, b is 0 or an integer of 1 to 5, c is 0 or an integer of 1 to 6 (provided that $a + b + c \geqq 3$, a and c are not zero at the same time), X are the same or different, and each is hydrogen atom or a monovalent organic group which has 1 to 5,000 carbon atoms and may contain oxygen atom, nitrogen atom, fluorine atom and/or chlorine atom, M is a metal atom having at least three valences, $R^1$ are the same or different, and each is hydrogen atom or a monovalent organic group which has 1 to 1,000 carbon atoms and may contain oxygen atom, nitrogen atom, fluorine atom and/or chlorine atom (provided that at least one of $R^1$ is one represented by the formula:

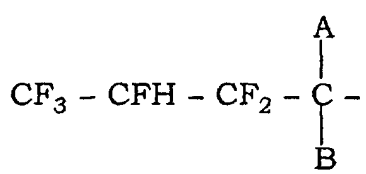

wherein A and B are the same or different, and each is hydrogen atom or $C_nH_{2n+1}$, in which n is an integer of 1 to 5, $R^2$ are the same or different, and each is a monovalent organic group which has 1 to 20 carbon atoms, has a chelating ability and may contain oxygen atom, nitrogen atom, fluorine atom and/or chlorine atom;
an oligomer thereof; or
a cooligomer comprising two or more of the organometallic compounds.

2. The organometallic compound, the oligomer thereof or the cooligomer comprising two or more of the organometallic compounds of Claim 1, wherein in the formula (1), at least one of $R^1$ is $CF_3CHFCF_2CH_2$, $CF_3CHFCF_2CH(CH_3)$ or $CF_3CHFCF_2C(CH_3)_2$.

3. The organometallic compound, the oligomer thereof or the cooligomer comprising two or more of the organometallic compounds of Claim 1 or 2, wherein the metal atom M is aluminum atom, titanium atom, boron atom, zirconium atom or silicon atom.

4. A stain-proofing agent comprising the organometallic compound, the oligomer thereof or the cooligomer comprising two or more of the organometallic compounds of any of Claims 1 to 3.

5. A coating composition comprising:

   (A) the stain-proofing agent of Claim 4,
   (B) a resin for paint, and
   (C) a curing agent and/or a curing catalyst.

6. The coating composition of Claim 5, wherein the resin for paint is a fluoroolefin copolymer containing hydroxyl group and/or carboxyl group, acrylic polyol resin, acrylic silicon resin, inorganic material or homopolymer or copolymer of vinylidene fluoride having no functional group which is soluble in a solvent.

## INTERNATIONAL SEARCH REPORT

International application No.
PCT/JP99/06782

A. CLASSIFICATION OF SUBJECT MATTER
Int.Cl[7] C07F7/04, C07F7/18, C09K3/00, C09D5/16, C09D127/12, C09D133/00, C09D183/00, C09D185/00

According to International Patent Classification (IPC) or to both national classification and IPC

B. FIELDS SEARCHED

Minimum documentation searched (classification system followed by classification symbols)
Int.Cl[7] C07F7/04, C07F7/18, C09K3/00, C09D5/16, C09D127/12, C09D133/00, C09D183/00, C09D185/00

Documentation searched other than minimum documentation to the extent that such documents are included in the fields searched

Electronic data base consulted during the international search (name of data base and, where practicable, search terms used)
CAPLUS(STN), CAOLD(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | CHAMBERS, Richard D.,<br>"Free radical chemistry. Part 3. Substituent effects in additions of ethers to fluorinated alkenes",<br>J. Chem. Soc., Perkin Trans. 1, 1985, No.11, p.2209-2213 | 1,3<br>2 |
| X<br>A | US, 3287339, A (Montecatini Societa Generale per l'Industria Mineraria e Chimica),<br>22 November, 1966 (22.11.66)<br>& GB, 999557, A | 1,3<br>2 |
| A | US, 5576109, A (Asahi Glass Company Ltd.),<br>19 November, 1996 (19.11.96)<br>& JP, 8-27456, A & EP, 678521, A2 | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 February, 2000 (24.02.00) | 07 March, 2000 (07.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)